# EUROPEAN PATENT SPECIFICATION

(11) **EP 3 743 253 B1**
(45) Date of publication and mention of the grant of the patent: **24.12.2025**
(21) Application number: 19709994.8
(22) Date of filing: 22.01.2019
(51) Int. Cl.: B27K 1/00, B27K 3/02, B27K 3/20, B27K 5/00, B27K 5/06

(54) **METHOD FOR TREATING WOOD**
VERFAHREN ZUR HOLZBEHANDLUNG
PROCÉDÉ DE TRAITEMENT DE BOIS

(30) Priority: 23.01.2018 FI 20185064
(43) Date of publication of application: 02.12.2020
(73) Proprietor: Tammiston Puu Oy, 27600 Hinnerjoki (FI)
(72) Inventor: HEINONEN, Markku, 27600 Hinnerjoki (FI)
(74) Representative: Laine IP Oy
(86) International application number: PCT/FI2019/050051
(87) International publication number: WO 2019/145606

(56) References cited:
- CN-A- 107 088 941
- GB-A- 566 766

## Description

### TECHNICAL FIELD

The present invention relates to treating wood in order to alter its utilization properties. Specifically the invention relates to treating wood in order to improve the rot and fire resistance properties thereof.

### BACKGROUND

Methods of treating wood with e.g. soluble glass, impregnation substances and copper compounds are known in prior art. Soluble glass is used to improve fire resistance and rot resistance, copper and copper compounds are mainly used to improve rot resistance. Soluble glass is sodium silicate xSiO2 * Na2O. The use of soluble glass for impregnating wood in atmospheric pressure has been researched since the early 19th century. Boric acid and borax have been used in connection with the impregnation. The use of soluble glass as a fire resistant material is known since the 1970's. Patent US 4,612,050 describes the use of soluble glass for petrifying wood, i.e. transforming wood material so as to correspond to petrified wood. Wood material treated with soluble glass can be treated with citric acid or malic acid. The publication "Fire Resistance of Wood Impregnated with Soluble Alkaline Silicates; Hindawi Publishing Corporation, Research Letters in Materials Science, Volume 2007, Article ID 31956, 4 pages" researches the fire resistance properties of wood treated with alkaline silicates. In this publication the wood is impregnated in pressurized conditions. Publication EP 2 646 208 describes a method using post-drying in elevated temperatures. Impregnation methods are described also in GB 566 766 and CN 107 088 941. Further relevant prior art is disclosed in WO 2009087262 and WO 2012072592.

### SUMMARY

The present invention relates to treatment of wood with alkaline silicates., such as soluble glass. The treatment allows improvement of the rot resistance of the wood and with soluble glass and other alkaline silicates allow improving the fire resistance of the wood. With soluble glass wood can be treated so as to be quite fire resistant. At the same time rot resistance and other weather resistance are considerably improved, whereby the method is suitable for production of wood material used in wood structures requiring weather resistance.

The invention is characterized by what is disclosed in the characterizing part of the independent claim.

According to a first feature of the invention the wood material is kept in hot water at a temperature from 100 to 260 °C, the wood material is dried and liquid treatment substance is impregnated thereto at a pressure of 5 to 20 bar and .
invention the liquid treatment substance is alkaline silicate.

According to a third feature of the invention the liquid treatment substance is soluble glass.

According to a fourth feature of the invention the wood material is dried in partial vacuum (pressure lower than ambient pressure) subsequent to treatment with hot liquid.

According to a fifth feature of the invention the wood material is treated with hot liquid in pressurized conditions.

According to a sixth feature of the invention the wood material is treated in pressure lower than ambient pressure subsequent to drying.

According to a seventh feature of the invention the wood material is post-dried subsequent to pressure treatment with a liquid treatment substance.

According to aneighth feature of the invention the wood material is solid wood.

According to a ninth feature of the invention the wood material is softwood, such as pine or spruce.

### BRIEF DESCRIPTION OF DRAWINGS

In the following, some embodiments of the invention are disclosed in more detail by means of reference to the appended drawings, in which:

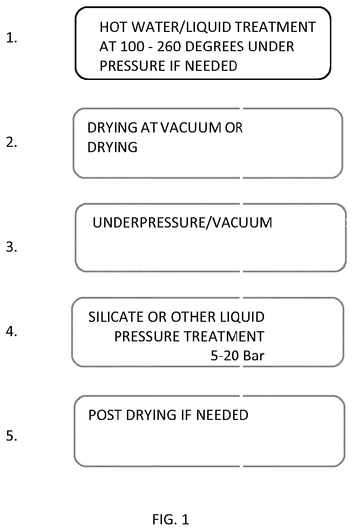

FIGURE 1 is a flow diagram showing a method according to at least one embodiment.

### EMBODIMENTS

### DEFINITIONS

In this context the term "solid wood" means wood consisting of one piece.

Wood material means wood-based materials consisting of a number of pieces, such as pieces of solid wood attached to each other, veneers, battens, boards, wood chips and combinations thereof, but not limiting thereto.

Ambient pressure and temperature mean a general temperature in the production plant, standard room temperature to be more precise, and pressure on sea level.

In this method wood material is treated by first keeping it in a hot water. The purpose of the treatment with hot water is to provide space into the cell structure of the wood for other materials to be impregnated thereto. The treatment substances can be alkaline silicates. The aim of liquid treatment is to improve the penetration rate and amount of treatment substance being transferred to the wood material. The result is, depending on the treatment substance, e.g. a very fire-resistant and/or a rot-resistant wood product.

Figure 1 shows the method according to one embodiment as a flow chart. The first step of the method is treatment of wood material with hot liquid. Preferably, the liquid is water. Additives can be added to water for enhancing the treatment. Such an additive could be a hemicellulose-dissolving washing agent. The washing agent can be lye or another corresponding strong base. By removing hemicellulose or by reducing the amount thereof the porosity and pore size of the cell structure of the wood can be increased, whereby it is possible to transfer more liquid treatment substance into the cell structure of the wood during the impregnation step.
The liquid used in the hot treatment must be hot enough for opening the cell structure, but the intention is not to cause cell changes in the wood material. From 100 to 260 °C is a suitable temperature range. The duration of the heat treatment must be sufficiently long. The length of the treatment time depends on the desired strength of the treatment and the thickness of the piece to be treated. Typically, the treatment time ranges from 0.5 to 8 hours.

Subsequent to the treatment with hot water the water must be removed from the wood material to be treated. As the wood material has been heated during the treatment, it will dry by itself after being taken away from the hot water, but it is preferable to enhance the drying by means of partial vacuum or heat. A sufficient circulation of air can naturally be used for enhancing drying both in ambient temperature as well as elevated temperature or partial vacuum. It is of course possible to use combinations of these. Subsequent to the drying taking place in the second step a separate vacuum treatment can be made in a third step, i.e. the wood material can be treated in pressure lower than the ambient pressure for removing air and other gases. The lowest treatment pressure can be very low, for example technical vacuum.

The treatment with liquid treatment substance takes place in the fourth step. Soluble glass is one of these treatment substances. Soluble glass can be used for improving fire resistance and weather resistance. Depending on the amount of soluble glass used the result can be wood material with slightly improved fire resistance or petrified wood with very good fire and weather resistance. All intermediate forms are naturally also possible. As the aim of the hot water treatment is to increase the penetration rate of the liquid treatment substance into the wood and the amount thereof remaining in the wood, it is most preferable in products in which the aim is to add great amounts of treatment substance in relation to the mass of the wood material to be treated. In addition to soluble glass other additives worth mentioning are other watersoluble alkaline silicates, especially commercially available sodium and boric silicates, allowing producing properties like those corresponding to soluble glass especially as far as fire resistance is concerned. Rot resistance can be improved with copper or copper compounds.

If a vacuum treatment is made before the treatment with liquid treatment substance, it is preferable to maintain the wood material in reduced pressure until it is submerged into the liquid treatment material. Such a procedure can be carried out in the same treatment vessel in which the pressure can be changed so as to be higher or lower than the ambient pressure. The pressure in the vessel or tank can be changed by known methods using vacuum pumps, compressors or liquid pumps. The invention can be carried out by means of known apparatuses from wood processing industry, such as driers and impregnators, suitable modified when necessary.

The invention can be applied to all kinds of wood-based construction materials. Hot water treatment can, however, weaken the properties of glued or bonded materials, whereby the method is more effective in the treatment of solid wood. Hemicellulose can be removed from wood material by means of the method. Usually, the removal of hemicellulose is an expensive procedure, and at least some of the hemicellulose can be inexpensively removed from the wood material by means of the invention. The wood material to be treated is preferable softwood, as it is more porous than hardwood, and larger amounts of treatment substance can be introduced into the softwood by means of the treatment. Pine and spruce can be mentioned as examples of wood species suitable for treatment.

Acid addition can be used for enhancing the polymerization of soluble glass. This acid can be added in hot state into the liquid or the liquid treatment substance or the acid treatment can be a separate step subsequent to impregnation with liquid treatment substance. The acid substances of the wood material itself, such as resins, also cause forming chains. Acid treatment is described in the publications disclosed in the preamble of this description.

In the following the method steps of figure 1 are described in chronological order.
1. Opening the cell structure of the wood material with hot liquid. Preferably the liquid is water. Treatment temperature range 100 to 260 °C
2. In step 2 the wood material is dried in partial vacuum or by some conventional means. The heat transferred into the wood during liquid treatment enhances drying.
3. In step 3 it is possible to perform an optional vacuum treatment for removing air from the wood material. The aim of this step is to increase penetration rate and the amount of transferred material. In this step the wood material is in a gaseous atmosphere, in a pressure lower than the ambient pressure.
4. The treatment with liquid treatment material is performed in step 4, in a pressure from 5 to 20 bar. Depending on the size and impregnation amount the treatment time can be from minutes (2 to 10 minutes) to up to 48 hours.
   Elevating the temperature lowers viscosity and thereby increases the penetration rate. Reference literature is available for carrying out this step.
5. Finally the treated wood can be dried to remove excess liquid.

In addition to those listed above, the liquid treatment substance can be a salt of metal, preferably from the group calcium sulphate or chloride, magnesium sulphate or chloride or barium sulphate or chloride or pine oil and combinations thereof. These salts and pine oil can be added or used as liquids and also in connection with the treatment by means of hot water.

### INDUSTRIAL APPLICABILITY

Fire and weather resistant wood-based materials can be produced by means of the invention for various application requiring such resistance.

### LIST OF REFERENCES

### Patent literature

US 4,612,050
EP 2 646 208
WO 2009087262
WO 2012072592

### Other publications

Fire Resistance of Wood Impregnated with Soluble Alkaline Silicates; Hindawi Publishing Corporation, Research Letters in Materials Science, Volume 2007, Article ID 31956, 4 pages

## Claims

1. A method of treating wood, by impregnating liquid alkaline silicate into the wood material, at a pressure from 5 to 20 bar:
**characterized in that**
the wood material is pretreated by keeping the wood material in hot water or in a hot water-based liquid comprising lye or other corresponding strong base at a
temperature from 100 to 260 °C, followed by drying the wood material.

2. A method according to claim 1, wherein the liquid treatment substance is soluble glass.

3. A method according to any of the above claims, wherein the wood material is dried subsequent to hot water treatment in a pressure lower than the ambient pressure.

4. A method according to any of the above claims, wherein the wood material is treated with hot liquid in pressurized conditions.

5. A method according to any of the above claims, wherein the wood material is treated in a pressure lower than ambient pressure subsequent to drying after the treatment with hot water.

6. A method according to any of the above claims, wherein the wood material is post-dried subsequent to the pressure treatment with liquid treatment substance.

7. A method according to any of the above claims, wherein the wood material to be treated is solid wood.

8. A method according to any of the previous claims, **characterized in that** the wood material is softwood, such as pine or spruce.

## Patentansprüche

1. Verfahren zur Holzbehandlung durch Imprägnierung des Holzmaterials mit flüssigem alkalischem Silikat bei einem Druck von 5 bis 20 bar:
**dadurch gekennzeichnet, dass**
das Holzmaterial vorbehandelt wird, indem das Holzmaterial in heißem Wasser oder in einer auf heißem Wasser basierenden Flüssigkeit, die Lauge oder eine andere entsprechende starke Base umfasst, bei einer Temperatur von 100 bis 260 °C gehalten wird, gefolgt von Trocknung des Holzmaterials.

2. Verfahren nach Anspruch 1, wobei es sich bei der flüssigen Behandlungssubstanz um lösliches Glas handelt.

3. Verfahren nach einem der vorstehenden Ansprüche, wobei das Holzmaterial im Anschluss an eine Heißwasserbehandlung bei einem Druck unterhalb des Umgebungsdrucks getrocknet wird.

4. Verfahren nach einem der vorstehenden Ansprüche, wobei das Holzmaterial unter Druckbedingungen mit heißer Flüssigkeit behandelt wird.

5. Verfahren nach einem der vorstehenden Ansprüche, wobei das Holzmaterial im Anschluss an Trocknung nach der Heißwasserbehandlung bei einem Druck unterhalb des Umgebungsdrucks behandelt wird.

6. Verfahren nach einem der vorstehenden Ansprüche, wobei das Holzmaterial im Anschluss an die Druckbehandlung mit flüssiger Behandlungssubstanz nachgetrocknet wird.

7. Verfahren nach einem der vorstehenden Ansprüche, wobei es sich bei dem zu behandelnden Holzmaterial um Massivholz handelt.

8. Verfahren nach einem der vorhergehenden Ansprüche, **dadurch gekennzeichnet, dass** es sich bei dem Holzmaterial um Weichholz wie Kiefer oder Fichte handelt.

## Revendications

1. Procédé de traitement du bois par imprégnation du matériau en bois avec du silicate alcalin liquide, sous une pression de 5 à 20 bars :
**caractérisé en ce que**
le matériau en bois est prétraité en le maintenant dans de l'eau chaude ou dans un liquide à base d'eau chaude comprenant de la lessive ou une autre base forte correspondante à une température de 100 à 260 °C, suivi d'un séchage du matériau de bois.

2. Procédé selon la revendication 1, dans lequel la substance de traitement de liquide est du verre soluble.

3. Procédé selon l'une quelconque des revendications précédentes, dans lequel le matériau en bois est séché après traitement à l'eau chaude sous une pression inférieure à la pression ambiante.

4. Procédé selon l'une quelconque des revendications précédentes, dans lequel le matériau en bois est traité avec un liquide chaud sous pression.

5. Procédé selon l'une quelconque des revendications précédentes, dans lequel le matériau en bois est traité sous une pression inférieure à la pression ambiante après séchage suite au traitement à l'eau chaude.

6. Procédé selon l'une quelconque des revendications précédentes, dans lequel le matériau en bois est séché après traitement sous pression avec une substance de traitement de liquide.

7. Procédé selon l'une quelconque des revendications précédentes, dans lequel le matériau en bois à traiter est du bois massif.

8. Procédé selon l'une quelconque des revendications précédentes, **caractérisé en ce que** le matériau en bois est un bois résineux, tel que du pin ou de l'épicéa.
